# EUROPÄISCHE PATENTSCHRIFT

(11) **EP 1 524 175 B1**
(45) Veröffentlichungstag und Bekanntmachung des Hinweises auf die Patenterteilung: **24.02.2010**
(21) Anmeldenummer: 04024072.3
(22) Anmeldetag: 08.10.2004
(51) Int. Cl.: B62D 25/10, B62D 29/04

(54) **Bauteil, insbesondere Aussenhautbauteil für ein Fahrzeug**
Part, especially a part of the external panelling of a motor vehicle
Elément, notamment un elément pour le revêtement extérieur d'un véhicule

(30) Priorität: 14.10.2003 DE 10347598
(43) Veröffentlichungstag der Anmeldung: 20.04.2005
(73) Patentinhaber: Bayerische Motoren Werke Aktiengesellschaft, 80809 München (DE)
(72) Erfinder: Schillinger, Alfons, 85057 Ingolstadt (DE); Koller, Max, 92345 Dietfurt (DE); Schwager, Hans, 85253 Erdweg (DE); Meyr, Wolfgang, 80807 München (DE)

(56) Entgegenhaltungen:
- EP-A- 0 307 600
- EP-A- 0 753 358
- EP-A- 0 903 285
- EP-A- 1 245 478
- DE-A1- 10 143 564
- DE-U- 7 506 327
- US-A1- 2003 178 738
- PATENT ABSTRACTS OF JAPAN Bd. 1995, Nr. 01, 28. Februar 1995 (1995-02-28) & JP 06 278660 A (MAZDA MOTOR CORP), 4. Oktober 1994 (1994-10-04)

## Beschreibung

Die Erfindung betrifft ein Verfahren zur Herstellung eines Bauteils, insbesondere eines Außenhautbauteils für ein Fahrzeug.

So ist zum Beispiel aus der EP 0 307 600 B1 ein Außenhautbauteil für ein Fahrzeug bekannt, mit einer Außenschale aus einem Blechbauteil und einer innenliegenden Verstärkungsstruktur aus zwei zueinander beabstandeten Kunststoffschichten.

Weiter sind allgemein Außenhautbauteile für Fahrzeuge bekannt, die aus einem Kunststoffmaterial, beispielsweise einem SMC-Material (Sheet Molding Compound), bestehen. Ähnlich wie in Blechbauweise ist die Außenschale dieser Außenhautbauteile innenseitig mit einer Innenschale aus einem Kunststoffmaterial versteift. Hierdurch entsteht jedoch ein beträchtlicher Fertigungsaufwand, vergleichbar dem der Blechschalenbauweise.

DE 10 143 564 A1 wird als nächstliegender Stand der Technik gesehen. Es offenbart ein Außenhautbauteil für ein Fahrzeug, mit einer Außenschale aus einem Kunststoff mit hoher Oberflächengüte und einer innenseitigen, flächig an der Außenschale anliegenden Verstärkungsstruktur, die aus zwei beabstandeten Kunststoffschichten besteht.

Bei einschaliger Bauweise sind aus Gründen der Steifigkeit beträchtliche Wandstärken erforderlich. Außerdem zeigen sich bei einschaligen SMC-Bauteile an Versteifungsrippen und bei Inserts Abzeichnungen an der Sichtfläche der Außenschale.

Aufgabe der Erfindung ist es, ein Verfahren zur Herstellung eines einfach aufgebauten Bauteils, insbesondere eines Außenhautbauteils für Fahrzeuge, bereitzustellen, das eine hohe Oberflächenqualität der Außenschale aufweist, bei gleichzeitig geringem Gewicht und einfacher und kostengünstiger Herstellung.

Diese Aufgabe wird durch ein Verfahren mit den Merkmalen des Anspruchs 1 gelöst.

Kerngedanke der Erfindung nach Anspruch 1 ist es dabei, eine vergleichsweise dünne Außenschale aus einem Kunststoff mit hoher Oberflächengüte zu kombinieren mit einer darunter liegenden Verstärkungsstruktur, welche die Außenschale über im wesentlichen der gesamten Fläche gleichmäßig stützt. Durch die flächige Verstärkungsstruktur wird vermieden, dass sich die Verstärkungsstruktur an der Sichtseite der Außenschale in Form von lokalen Unterstützungsstellen oder -Linien abzeichnet. Die Verstärkungsstruktur besteht erfindungsgemäß aus zwei zueinander beabstandeten Kunststoffschichten, die hinsichtlich ihrer Oberflächenqualität deutlich geringere Anforderungen zu erfüllen haben als die Außenschale.

Bei dem erfindungsgemäßen Verfahren wird zunächst die Außenschale des Bauteils hergestellt. Das hierzu erforderliche Werkzeug besteht aus einer Matrize und einem Stempel. Die Matrize ist so gestaltet, dass eine lackierfähige Bauteilaußenseite mit hoher Oberflächenqualität herstellbar ist. Mit dem Stempel wird die Innenkontur der Außenschale geformt. In das Werkzeug werden beispielsweise SMC-Halbzeuge eingelegt und anschließend unter vergleichsweise hohem Druck verpresst. Alternativ kann auch eine BMC-Formmasse in das Werkzeug eingebracht werden. Eine weitere Möglichkeit besteht darin, die Sichtschicht im RTM-Verfahren herzustellen.

Im nächsten Schritt wird das Werkzeug geöffnet und die Verstärkungsstruktur eingelegt, die als vorgefertigtes Halbzeug mit zwei zueinander beabstandeten Kunststoffschichten und dazwischenliegenden Abstandshaltern oder einer Abstandsschicht ausgebildet ist. Ferner wird der Stempel aus dem ersten Herstellschritt gegen einen zweiten Stempel ausgetauscht. Der zweite Stempel ist hinsichtlich seiner Geometrie so beschaffen, dass hiermit die Innenkontur des Bauteils hergestellt werden kann.

Die beiden Kunststoffschichten der Verstärkungsstruktur bestehen aus einem Kunststoffmaterial, das von einer reaktiven Matrix gebildet wird.

Nachfolgend wird das Werkzeug geschlossen und unter vergleichsweise geringem Druck und einer gesteuerten Temperaturführung eine spaltfreie Anlage der Verstärkungsstruktur an die Innenseite der Außenschale erreicht. Dabei härtet die reaktive Matrix der Verstärkungsstruktur aus, wobei die reaktive Matrix gleichzeitig eine stoffschlüssige Verbindung der Verstärkungsstruktur mit der Innenseite der Außenschale bewirkt. Der Auftrag eines Klebers kann hiermit entfallen. Lediglich im Einzelfall kann der Auftrag eines Haftvermittlers oder einer dünnen Klebeschicht in prozesstechnischer Hinsicht vorteilhaft sein.

Der niedrige Druck zum Anpassen der Verstärkungsstruktur an die Innenkontur der Außenschale ergibt sich beispielsweise von selbst durch die Expansion der reaktiven Matrix während des Aushärtevorgangs.

Der relativ niedrige Verarbeitungsdruck ermöglicht eine hohe Oberflächenqualität und eine hohe Konturgenauigkeit. Außerdem ist das erfindungsgemäß hergestellte Bauteil weitestgehend frei von inneren Spannungen und neigt nur in sehr geringem Maß zu Verzug.

Durch das erfindungsgemäße Herstellverfahren kann ohne zwischenzeitliche Entnahme der Außenschale aus dem Werkzeug allein durch Austausch des Stempels das Bauteil in demselben Werkzeug komplett gefertigt werden. Durch den Verzicht auf ein separates Werkzeug mit eigener Außenschale ergeben sich Kosteneinsparungen sowie ein verbessertes Handling ("1½-Step-Verfahren" im Vergleich zu einem zweistufigen Verfahren mit zwei Paaren von Matrizen und Stempeln).

Nach der Entnahme aus dem Werkzeug kann das Bauteil weiter bearbeitet werden.

Es ist zwar aus der DE 198 14 039 A1 bekannt, ein Sandwichelement mit einer oberen und einer unteren SMC-Deckschicht herzustellen, wobei zwischen den Deckschichten ein isolierender Kern, beispielsweise aus einem Schaummaterial, angeordnet ist. Ein Hinweis auf eine stützende Verstärkungsschicht aus zwei zueinander beabstandeten Kunststoffschichten ist dieser Schrift jedoch nicht zu entnehmen. Vielmehr wird bei dem bekannten Sandwichelement der Kern aus dem Schaummaterial unmittelbar mit dem SMC-Material verbunden. Hinzu kommt, dass das Verfahren zur Herstellung der bekannten Sandwichelemente ausdrücklich als Niederdruckverfahren zur Herstellung der SMC-Deckschichten ausgelegt ist.

Die Außenschale wird bevorzugt im SMC- (Sheet Molding Compound), BMC- (Bulk Molding Compound) oder einem RTM- (Resin Transfer Molding) Verfahren hergestellt.

Bauteile aus den genannten Kunststoffhalbzeugen zeichnen sich durch eine hohe Oberflächenqualität aus, die zudem eine Lackierung analog einem Blechbauteil ermöglicht. Wird somit beispielsweise eine erfindungsgemäße Frontklappe in ein Fahrzeug mit Kotflügeln aus einem Blechmaterial eingesetzt, sind die unterschiedlichen Materialien von Frontklappe und Kotflügeln aufgrund der hohen Oberflächengüte der erfindungsgemäßen Frontklappe und der einheitlichen Lackierung optisch nicht zu erkennen.

Durch den Hybridaufbau mit einer innenliegenden flächige Verstärkungsstruktur wird zudem eine hohe Steifigkeit und Festigkeit für das Bauteil erreicht, bei deutlich reduzierter Dicke der Außenschale im Vergleich zu einer herkömmlichen Kunststoff-Schalenbauweise. Damit ergibt sich ein geringeres Gewicht des Fahrzeugs mit einer Absenkung des Kraftstoffverbrauches und einer Verbesserung der Fahrdynamik.

Zwischen den beiden Kunststoffschichten der Verstärkungsstruktur ist beispielsweise eine Mehrzahl von Abstandshaltern vorgesehen, durch die eine hohe Steifigkeit der Verstärkungsstruktur erreicht wird. Ein Abzeichnen der Auflagelinien der Abstandshalter findet nicht statt, da die Abstandshalter nicht bis unmittelbar an die Außenschale reichen, sondern die Stützkraft durch die der Außenschale benachbarte Kunststoffschicht aufgenommen wird.

Eine weitere Möglichkeit der Beabstandung der beiden Kunststoffschichten besteht darin, zwischen den Kunststoffschichten eine Wabenstruktur vorzusehen. Anstelle der Wabenstruktur kann auch eine Schicht aus einem schaumartigen Werkstoff vorgesehen sein. Die Wabenstruktur kann mit einer Imprägnierung versehen sein, beispielsweise um den Flammschutz zu erhöhen und/oder die Wasseraufnahme zu reduzieren.

Weiter ist es möglich, bei einer Verstärkungsstruktur mit mehreren diskreten Abstandshaltern die Zwischenräume zwischen den Abstandshaltern auszuschäumen oder mit Zuschnitten aus einem schaumartigen Werkstoff zumindest teilweise auszufüllen.

Grundsätzlich kann der Zwischenraum zwischen den beiden Kunststoffschichten zumindest teilweise mit einem Material mit schalldämmenden Eigenschaften ausgefüllt sein.

In einer Weiterbildung der Erfindung kann innerhalb der Verstärkungsstruktur zwischen den beiden Kunststoffschichten auch ein Einlegeteil eingesetzt sein, das der Anbindung beispielsweise von Anbauteilen dient. Derartige Einlegeteile, auch als "Inserts" bezeichnet, werden zum Beispiel von einer metallischen Gewindebuchse, einem Blechstreifen oder dergleichen gebildet. Durch die Verwendung von Inserts wird eine deutliche Erhöhung der Ausreißkräfte des angebundenen Anbauteils erreicht, beispielsweise bei einem Crash. Die Inserts können selbst die Funktion eines Abstandshalters wahrnehmen, mit Vorteilen hinsichtlich Gewicht und Kosten durch diese Doppelfunktion der Inserts.

Die der Außenschale abgewandte Kunststoffschicht der Verstärkungsstruktur kann eine Oberfläche mit einer Mehrzahl von Vertiefungen und Erhöhungen aufweisen, woraus sich schallschluckende Eigenschaften der Verstärkungsstruktur ergeben. Dies ist beispielsweise von Vorteil, wenn das Bauteil als Frontklappe eines Fahrzeugs ausgebildet ist und durch die innenliegende Verstärkungsstruktur der im Motorraum entstehende Schall gedämmt werden kann.

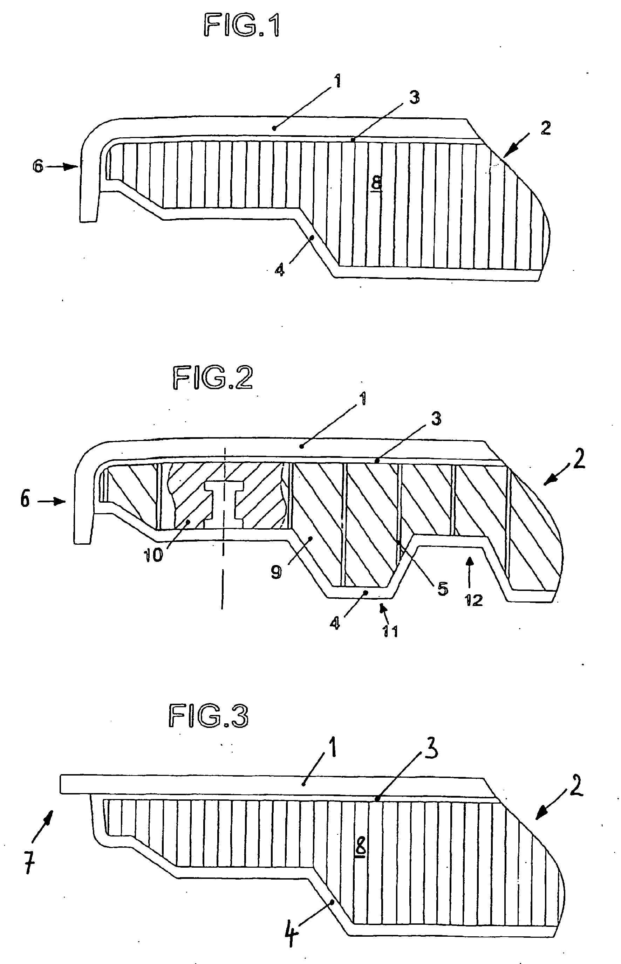

Mögliche Ausführungsformen der Erfindung sind in der Zeichnung dargestellt und werden nachfolgend näher beschrieben. Die Figuren 1 bis 3 sind hierbei Querschnitte durch verschiedene Ausführungsformen erfindungsgemäßer Bauteile.

Die Schnittdarstellungen der Fig. 1 bis 3 zeigen erfindungsgemäße Bauteile, die sich jeweils aus einer Außenschale 1 sowie einer darunter angeordneten Verstärkungsstruktur 2 zusammensetzen. Die Außenschale 1 bildet mit ihrer Außenseite die Sichtfläche des Bauteils, das beispielsweise als Frontklappe für ein Kraftfahrzeug ausgebildet ist. Die innenliegende Verstärkungsstruktur 2 besteht aus zwei zueinander beabstandeten Kunststoffschichten 3 und 4. Die Verstärkungsstruktur 2 hat versteifende Aufgaben und ist von der Außenseite des Fahrzeugs nicht sichtbar, so dass die Oberflächenqualität der Kunststoffschichten 3 und 4 weniger hochwertig ist als die der Außenseite der Außenschale 1.

Beim Ausführungsbeispiel gemäß Fig. 1 ist zwischen den beiden Kunststoffschichten 3 und 4 eine Wabenstruktur 8 angeordnet, die den für die Steifigkeit des Bauteils erforderlichen Abstand gewährleistet. Im Randbereich 6 sind die beiden Schichten 3 und 4 miteinander verbunden. In diesem Bereich 6 ist die Außenschale 1 zudem nach innen abgebogen und deckt hiermit die Verstärkungsstruktur 2 seitlich ab.

Fig. 2 zeigt ein zweites Ausführungsbeispiel der Erfindung, bei dem anstelle einer Wabenstruktur eine Vielzahl von Abstandshaltern 5 vorgesehen ist, die senkrecht zu den beiden Kunststoffschichten 3 und 4 verlaufen. Die Zwischenräume zwischen den Abstandshaltern 5 sind mit Elementen 9 aus einem schalldämmenden Werkstoff ausgefüllt. Außerdem ist zwischen zwei Abstandshaltern 5 ein insert 10 eingesetzt, das der Aufnahme eines nicht dargestellten Anbauteils dient. Das Insert 10 besteht aus einem Block mit einer Breite entsprechend der Breite des Zwischenraumes zwischen zwei Abstandshaltern 5. Abweichend von der zeichnerischen Darstellung kann das Insert auch einen oder mehrere Abstandshalter 5 ersetzen, indem es selbst die Funktion eines Abstandshalters wahrnimmt.

Wie aus Fig. 2 hervorgeht, ist die Kunststoffschicht 4 so geformt und ist die Länge der Abstandshalter 5 so bemessen, dass sich eine Reihe von Erhebungen 11 und Vertiefungen 12 ergibt, die an der Unterseite des Bauteils eine schallschluckende Kontur bilden. Diese kann im Fall der Ausbildung des Bauteils als Frontklappe eines Kraftfahrzeuges maßgeblich zur Geräuschreduzierung im Bereich des Motorraumes beitragen.

Fig. 3 zeigt ein Ausführungsbeispiel ähnlich Fig. 1, bei dem jedoch der Randbereich 7 der Außenschale 1 frei absteht und hiermit den Seitenbereich der Verstärkungsstruktur 2 nicht abdeckt. Ein Außenhautbauteil gemäß Fig. 3 eignet sich vor allem für solche Karosseriebauteile, die bündig in einem Karosserieausschnitt aufgenommen sind, wie beispielsweise ein Tankdeckel. Demgegenüber sind Bauteile mit einem Randabschluss gemäß den Fig. 1 und 2 bevorzugt für solche Karosseriebauteile geeignet, die aus optischen Gründen und/oder wegen Sicherheitsanforderungen eine entsprechend stark gerundete Kante aufweisen müssen, wie dies beispielsweise bei Front- und Heckklappen oder einem Schiebedachdeckel der Fall ist.

Die Außenschalen 1 der Bauteile bestehen beispielsweise aus einem SMC-Material, während die beiden Kunststoffschichten 3 und 4 der Verstärkungsstruktur eine reaktive Matrix aufweisen. Der reaktive Kunststoff der beiden Schichten 3 und 4 verbindet nicht nur die oben liegende Kunststoffschicht 3 mit der Innenseite der Außenschale 1, sondern bewirkt im Fall der Ausführungsbeispiele gemäß der Fig. 1 und 3 auch eine innige Verbindung der Kunststoffschichten 3 und 4 mit der dazwischenliegenden Wabenstruktur 8, indem der reaktive Kunststoff während des Aushärtens unter geringem Druck in Richtung der Wabenstruktur 8 fließt.

Bei den erfindungsgemäßen Bauteilen kann die Außenschale 1 in deutlich geringerer Materialstärke ausgeführt werden als die bei konventionell hergestellten zweischaligen Bauteilen aus Kunststoff möglich ist. So ist es ohne Einbußen hinsichtlich der Oberflächenqualität und der Steifigkeit und Festigkeit möglich, die Außenschale 1 aus einem SMC-Material mit einer Wandstärke von ca. 2 mm herzustellen.

Die Kunststoffschichten 3 und 4 der Verstärkungsstruktur 2 bestehen beispielsweise aus einem glasfaserverstärkten Duroplast wie PUR oder EP mit einer Materialstärke von beispielsweise 0,2 bis 0,4 mm.

Die Wabenstruktur 8 gemäß den Ausführungsbeispielen nach Fig. 1 und 3 kann aus Papier, Aramid oder Kunststoff bestehen. Anstelle der Wabenstruktur 8 kann auch eine Schaumstruktur vorgesehen sein.

Die Herstellung der Außenschale 1 im ersten Verfahrensschritt erfolgt bei Drücken von ca. 120 bar, während im zweiten Verfahrensschritt nach dem Einlegen der Verstärkungsstruktur 2 in das Werkzeug ein Arbeitsdruck von nur mehr ca. 10 bar erforderlich ist. Daher kann der zweite Stempel sehr einfach ausgebildet sein.

Die erfindungsgemäßen Bauteile mit einer Außenschale aus SMC zeichnen sich durch eine hohe Gestaltungsfreiheit hinsichtlich der Außenkontur aus, während bei Hybridbauteilen mit einer Außenschale aus einem metallischen Blechmaterial die Tiefziehfähigkeit begrenzt ist oder zumindest bei mehreren hintereinander geschalteten Ziehstufen hohe Fertigungskosten anfallen. Somit eignet sich das erfindungsgemäße Verfahren in besonderer Weise zur Herstellung dreidimensional geformter Bauteile, wobei auch kompliziert geformte Konturen herstellbar sind.

## Patentansprüche

1. Verfahren zur Herstellung eines Bauteils, insbesondere eines Außenhautbauteils für ein Fahrzeug, mit einer Außenschale (1) aus einem Kunststoff mit hoher Oberflächengüte und einer innenseitigen, flächig an der Außenschale (1) anliegenden Verstärkungsstruktur (2), die aus zwei zueinander beabstandeten Kunststoffschichten (3, 4) besteht, wobei die Kunststoffschichten (3, 4) der Verstärkungsstruktur (1) von einer reaktiven Matrix gebildet werden,
mit den folgenden Schritten:
1. Herstellen der Außenschale (1) in einem Werkzeug mit einer Matrize und einem ersten Stempel,
2. Öffnen des Werkzeugs und Einlegen der Verstärkungsstruktur (2) in das Werkzeug auf die im Werkzeug verbliebene Außenschale (1) und Austausch des ersten Stempels gegen einen zweiten Stempel für die Bildung der Kontur der Verstärkungsstruktur (2) und
3. Schließen des Werkzeugs und Verpressen von Außenschale (1) und Verstärkungsstruktur (2).

2. Verfahren nach Anspruch 1,
**dadurch gekennzeichnet, dass** die Außenschale (1) aus einem SMC- oder einem BMC-Material besteht oder in einem RTM-Verfahren hergestellt wird.

3. Verfahren nach Anspruch 1 oder 2,
**dadurch gekennzeichnet, dass** zwischen den beiden Kunststoffschichten (3, 4) eine Mehrzahl von Abstandshaltern (5) vorgesehen ist.

4. Verfahren nach Anspruch 1 oder 2,
**dadurch gekennzeichnet, dass** zwischen den beiden Kunststoffschichten (3, 4) eine Wabenstruktur (8) vorgesehen ist.

5. Verfahren nach einem der Ansprüche 1 bis 3,
**dadurch gekennzeichnet, dass** zwischen den beiden Kunststoffschichten (3, 4) ein schaumartiger Werkstoff (9) vorgesehen ist.

6. Verfahren nach Anspruch 5,
**dadurch gekennzeichnet, dass** der schaumartige Werkstoff (9) schalldämmende Eigenschaften hat.

7. Verfahren nach einem der vorangegangenen Ansprüche,
**dadurch gekennzeichnet, dass** zwischen den beiden Kunststoffschichten (3, 4) wenigstens ein Insert (10) angeordnet ist.

8. Verfahren nach Anspruch 7,
**dadurch gekennzeichnet, dass** das Insert (10) die Funktion eines Abstandshalters zwischen den beiden Kunststoffschichten (3, 4) hat.

9. Verfahren nach einem der vorangegangenen Ansprüche,
**dadurch gekennzeichnet, dass** die der Außenschale (1) abgewandte Kunststoffschicht (4) der Verstärkungsstruktur (2) Vorsprünge (11) und Vertiefungen (12) aufweist, die eine schallschluckende Kontur der Kunststoffschicht (4) erzeugen.

## Claims

1. A method of producing a component, especially a skin component for a motor vehicle, comprising an outer shell (1) made of a plastic having a high surface quality and an inner reinforcing structure (2) abutting the surface of the outer shell (1) and comprising two spaced-apart plastic layers (3, 4), wherein the plastic layers (3, 4) of the reinforcing structure (1) are formed from a reactive matrix,
in the following steps:
1. production of the outer shell (1) in a tool comprising a mould and a first punch,
2. opening the tool and inserting the reinforcing structure (2) into the tool and on to the outer shell (1) remaining in the tool and replacing the first punch by a second punch for forming the contour of the reinforcing structure (2), and
3. closing the tool and pressing together the outer shell (1) and the reinforcing structure (2).

2. A method according to claim 1,
**characterised in that** the outer shell (1) consists of an SMC or a BMC material or is produced in an RTM process.

3. A method according to claim 1 or 2,
**characterised in that** a number of spacers (5) are provided between the two plastic layers (3, 4).

4. A method according to claim 1 or 2,
**characterised in that** a honeycomb structure (8) is provided between the two plastic layers (3, 4).

5. A method according to any of claims 1 to 3,
**characterised in that** a foam material (9) is provided between the two plastic layers (3, 4).

6. A method according to claim 5,
**characterised in that** the foam material (9) has sound-absorbing properties.

7. A method according to any of the preceding claims, **characterised in that** at least one insert (10) is placed between the two plastic layers (3, 4).

8. A method according to claim 7,
**characterised in that** the insert (10) acts as a spacer between the two plastic layers (3, 4).

9. A method according to any of the preceding claims,
**characterised in that** the plastic layer (4) of the reinforcing structure (2) remote from the outer shell (1) has projections (11) and recesses (12) which give the plastic layer (4) a soundproofing contour.

## Revendications

1. Procédé de fabrication d'un élément, notamment d'un élément pour l'habillage extérieur d'un véhicule comportant une coque extérieure (1) en matière plastique ayant une qualité de surface élevée et, du côté intérieur, une structure de renforcement (2) appliquée à plat contre la coque extérieure (1), cette structure de renforcement se composant de deux couches de matière plastique (3, 4) écartées l'une de l'autre, les couches de matière plastique (3, 4) de la structure de renforcement (2) étant constituées par une matrice réactive,
procédé comprenant les étapes suivantes :
1. réalisation de la coque extérieure (1) dans un outil avec une matrice et un premier poinçon,
2. ouverture de l'outil et mise en place de la structure de renforcement (2) dans l'outil sur la coque extérieure (1) qui reste dans l'outil et remplacement du premier poinçon par un second poinçon pour former le contour de la structure de renforcement (2),
3. fermeture de l'outil et compression de la coque extérieure (1) et de la structure de renforcement (2).

2. Procédé selon la revendication 1,
**caractérisé en ce que**
la coque extérieure (1) se compose d'un matériau SMC ou BMC ou est réalisée selon un procédé RTM.

3. Procédé selon la revendication 1 ou 2,
**caractérisé par**
un ensemble d'organes d'écartement (5) entre les deux couches de matière plastique (3, 4).

4. Procédé selon la revendication 1 ou 2,
**caractérisé par**
une structure en nids d'abeilles (8) entre les deux couches de matière plastique (3, 4).

5. Procédé selon les revendications 1 à 3,
**caractérisé par**
une matière expansée (9) entre les deux couches de matière plastique (3, 4).

6. Procédé selon la revendication 5,
**caractérisé en ce que**
la matière expansée (9) a des caractéristiques d'isolation phonique.

7. Procédé selon les revendications précédentes,
**caractérisé par**
au moins un insert (10) entre les deux couches de matières plastique (3, 4).

8. Procédé selon la revendication 7,
**caractérisé en ce que**
l'insert (10) a la fonction d'un organe d'écartement entre les deux couches de matière plastique (3, 4).

9. Procédé selon les revendications précédentes,
**caractérisé en ce que**
la couche de matière plastique (4) de la structure de renforcement (2), non tournée vers la coque extérieure (1) comporte des parties en saillie (11) et des cavités (12) créant un profil d'amortissement phonique de la couche de matière plastique (4).
